(19) Europäisches Patentamt
European Patent Office
Office européen des brevets

(11) EP 3 929 560 A1

(12) **EUROPEAN PATENT APPLICATION**
published in accordance with Art. 153(4) EPC

(43) Date of publication:
**29.12.2021 Bulletin 2021/52**

(51) Int Cl.:
***G01N 3/08*** *(2006.01)*    ***G01N 3/32*** *(2006.01)*

(21) Application number: **19915743.9**

(22) Date of filing: **20.02.2019**

(86) International application number:
**PCT/JP2019/006335**

(87) International publication number:
**WO 2020/170360 (27.08.2020 Gazette 2020/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **IHI Inspection and Instrumentation Co., Ltd.**
**Tokyo 140-0013 (JP)**

(72) Inventor: **KAWASAKI, Hiraku**
**Kanagawa 236-0004 (JP)**

(74) Representative: **Grünecker Patent- und Rechtsanwälte**
**PartG mbB**
**Leopoldstraße 4**
**80802 München (DE)**

(54) **STRENGTH INSPECTION METHOD AND STRENGTH INSPECTION DEVICE**

(57)    A strength inspection device for evaluating a tensile strength of a test body as a fiber reinforced composite material includes: an AE sensor 1 that detects AE waves generated in the test body by a tensile load in a test period of application of the increasing tensile load to the test body, and generates waveform data of the AE waves; a target wave specifying unit 2 that specifies, as target waves, the AE waves of duration longer than a time threshold, based on the waveform data; an arithmetic unit 3 calculates a frequency center of gravity concerning each target wave; and an evaluation data generation unit 4 generates strength evaluation data of association between the frequency center of gravity concerning each target waves and magnitude of the tensile load applied to the test body at a detection time point of the target wave.

FIG. 1

## Description

### TECHNICAL FIELD

The present disclosure relates to a technique of inspecting a tensile strength of a test body that is a fiber reinforced composite material (FRP: fiber reinforced plastic). More specifically, the present disclosure relates to a technique of inspecting a tensile strength of a test body, based on an acoustic emission (AE) wave that is generated in the test body by applying a tensile load to the test body.

### BACKGROUND ART

FRP is used in rockets and aircrafts. Particularly, carbon fiber reinforced composite material (CFRP: carbon fiber reinforced plastic) is superior in strength and rigidity. Peeling of laminated layers and breaking of fibers occur in FRP before FRP is destroyed.

Patent Literature 1 discloses a technique of inspecting a tensile strength of the above-described FRP. A strength inspection method of Patent Literature 1 evaluates a tensile strength of FRP as follows. A tensile load is applied to a test body. This tensile load is increased as time elapses. An AE wave generated in the test body by this tensile load is detected. A plurality of frequency components of the AE wave in each of a plurality of load application sections included in a test period are acquired. For each of the load application sections, a frequency center of gravity concerning the AE wave is acquired based on a plurality of the frequency components. The load application section that is among a plurality of the load application sections and whose frequency center of gravity becomes lower than that of the preceding load application section is specified. Magnitude of the tensile load applied to the test body in the specified load application section is determined as a tensile strength of the test body.

### CITATION LIST

### PATENT LITERATURES

Patent Literature 1: Japanese Patent No. 5841081

### SUMMARY OF INVENTION

### TECHNICAL PROBLEM

A large number of AE waves (each of which is a series of displacements) occur intermittently in a test body in a state where a tensile load is applied to the test body. Some of these AE waves tend not to indicate whether or not the test body is broken. For this reason, it is desired to specify the AE waves that tend to indicate whether or not the test body is broken, so that a tensile strength of the test body is evaluated based on the specified AE waves.

In other words, an object of the present disclosure is to provide a technique of specifying AE waves that tend to indicate whether or not a test body is broken, and evaluating a tensile strength of the test body, based on the specified AE waves.

### SOLUTION TO PROBLEM

A strength inspection device according to the present disclosure is provided for evaluating a tensile strength of a test body that is a fiber reinforced composite material, the strength inspection device including:

an AE sensor that detects AE waves in a test period in which a tensile load is applied to the test body while increased, the AE waves being generated in the test body by the tensile load, the AE sensor generating waveform data of the AE waves;
a target wave specifying unit that specifies, as target waves, the AE waves each having duration longer than a time threshold, based on the waveform data;
an arithmetic unit that calculates a frequency center of gravity concerning each of the target waves; and
an evaluation data generation unit that generates strength evaluation data in which the frequency center of gravity concerning each of the target waves is associated with magnitude of the tensile load applied to the test body at a detection time point of the target wave.

A strength inspection method according to the present disclosure is performed for evaluating a tensile strength of a test body that is a fiber reinforced composite material, the strength inspection method including:

applying a tensile load to the test body while increasing the tensile load, and by an AE sensor, generating waveform data of AE waves generated in the test body by the tensile load;
by a target wave specifying unit, specifying, as target waves, the AE waves each having duration longer than a time threshold, based on the waveform data;
by an arithmetic unit, calculating a frequency center of gravity concerning each of the target waves; and
by an evaluation data generation unit, generating strength evaluation data in which the frequency center of gravity concerning each of the target waves is associated with magnitude of the tensile load applied to the test body at a detection time point of the target wave.

### ADVANTAGEOUS EFFECTS OF INVENTION

According to the present disclosure, the following is made. AE waves are generated in a test body in a test period in which a tensile load is applied to the test body while increased. The waveform data of the AE waves are generated. The AE waves each having duration longer than a time threshold are specified as target waves, based on the waveform data. The strength evaluation data are then generated. In the strength evaluation data, for each of the target waves, the frequency center of gravity concerning the target wave is associated with magnitude of the tensile load applied to the test body at a detection time point of the target wave.

In this regard, the AE wave having duration longer than the time threshold tends to include frequency information indicating whether or not the test body is broken. Accordingly, a tensile strength of the test body can be evaluated based on the strength evaluation data generated based on the AE waves that tend to indicate whether or not the test body is broken.

**BRIEF DESCRIPTION OF DRAWINGS**

FIG. 1 is a block diagram illustrating a strength inspection device according to an embodiment of the present disclosure.

FIG. 2 is a schematic illustration representing one example of waveform data generated by an AE sensor.

FIG. 3A is a concept illustration representing one example of frequency-center-of-gravity date.

FIG. 3B is a concept illustration representing one example of load data.

FIG. 3C is a concept illustration representing one example of strength evaluation data.

FIG. 4 is a flowchart of a strength inspection method according to the embodiment of the present disclosure.

FIG. 5A represents strength evaluation data generated by a strength inspection method according to a comparative example.

FIG. 5B represents, with a gray scale, a density of frequency-center-of-gravity plots in FIG. 5A.

FIG. 6A represents strength evaluation data generated by the strength inspection method according to the embodiment of the present disclosure, and represents the case where a time threshold is 30 microseconds.

FIG. 6B represents strength evaluation data generated by the strength inspection method according to the embodiment of the present disclosure, and represents the case where the time threshold is 200 microseconds.

**DESCRIPTION OF EMBODIMENTS**

The following describes an embodiment of the present disclosure with reference to the drawings. The same reference sign is allocated to the corresponding part in each of the drawings, and overlapping description is omitted.

(Configuration of Strength Inspection Device)

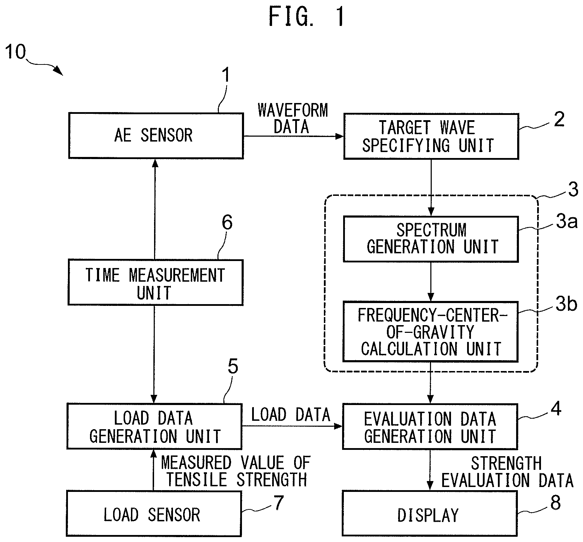

FIG. 1 is a block diagram illustrating a strength inspection device 10 according to an embodiment of the present disclosure. The strength inspection device 10 is provided for evaluating a tensile strength of a test body, based on an AE wave generated in the test body when a tensile load is applied to the test body. The test body is a fiber-reinforced composite material. Here, the fiber-reinforced composite material is CFRP, for example. The test body may be CFRP constituting a rocket or an aircraft or be CFRP constituting a hydrogen tank that stores hydrogen. The hydrogen tank is installed in an automobile that runs by using the hydrogen as fuel. However, the test body is not limited to these.

The strength inspection device 10 includes an AE sensor 1, a target wave specifying unit 2, an arithmetic unit 3, and an evaluation data generation unit 4.

The AE sensor 1 is attached to the test body, and detects AE waves generated in the test body. More specifically, the AE sensor 1 generates waveform data of the AE waves that are generated in the test body by a tensile load in a test period. In this test period, the tensile load is applied to the test body while increased. The waveform data represent a displacement of each of the AE waves at each time point.

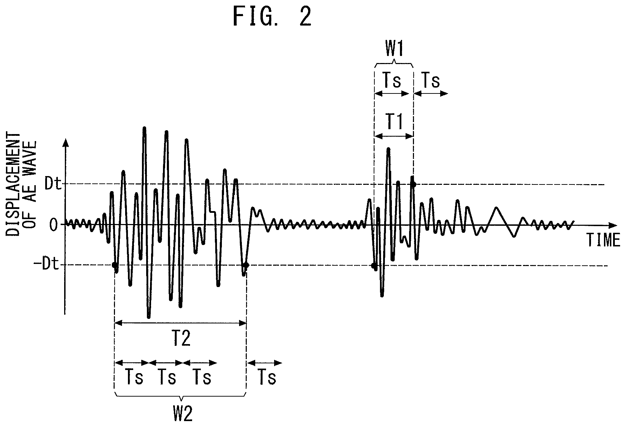

FIG. 2 is a schematic illustration representing one example of the waveform data. In FIG. 2, the horizontal axis indicates lapse time, and the vertical axis indicates a displacement of each AE wave. FIG. 2 represents two AE waves W1 and W2 each of which is regarded as one AE wave. The one AE wave is constituted by a series of displacements in the waveform data. A large number of AE waves are generated intermittently in the test period. The AE sensor 1 may generate waveform data of AE waves, based on lapse time measured by the below-described time measurement unit 6. The time measurement unit 6 may be incorporated in the AE sensor 1.

The target wave specifying unit 2 specifies, as target waves, AE waves each having duration longer than a time threshold, based on waveform data generated by the AE sensor 1. More specifically, in waveform data, the target wave specifying unit 2 specifies, as target waves, the AE waves each of which lasts for a time length longer than the time threshold and each of which is a series of displacements where each time a set time (Ts in FIG. 2) elapses, the displacement having magnitude equal to or larger than a displacement threshold (Dt on FIG. 2) occurs at least once in this set time Ts. In other words, the target wave specifying unit 2 specifies each AE wave, determines duration of each of the specified AE waves, and specifies, as the target wave, each AE wave that is included in these specified AE waves and that has the duration longer than the time threshold. In the example of FIG. 2, the AE wave W1 is not specified as a target wave because of its duration T1 equal to or shorter than the time threshold, and the AE wave W2 is specified as a target wave because of its duration T2 longer than the time threshold.

In one example, the target wave specifying unit 2 performs processing as follows. The target wave specifying unit 2 specifies a start time point of duration of each AE wave, in the above-described waveform data. This start time point is one when magnitude of a displacement first reaches the displacement threshold Dt after the set time Ts elapses while magnitude of any AE-wave displacements remain smaller than the threshold Dt, as illustrated in FIG. 2. Further, the target wave specifying unit 2 specifies a time point that is one when the set time Ts first elapses after the start time point of the duration while magnitude of any AE-wave displacements remain smaller than the displacement threshold Dt. Then, the target wave specifying unit 2 specifies a start time point of this set time Ts, as an end time point of the duration, as illustrated in FIG. 2. The target wave specifying unit 2 thus determines the duration of each of AE waves, and determines whether or not the duration of each of the AE waves is longer than the time threshold. The target wave specifying unit 2 thereby specifies, as a target wave, each of the AE waves that are included in a large number of AE waves and that each have the duration longer than the time threshold.

The appropriate time threshold varies depending on a type of fiber reinforced composite material as the test body, and thus, may be experimentally determined in advance for each type of test body. In one example, the time threshold may be set such that the number of times of occurrence of an AE wave belonging to the test period and having duration equal to or smaller than the time threshold is larger than that of an AE wave (target wave) belonging to the test period and having duration longer than the time threshold. This setting may be made based on experiments on fiber reinforced composite materials having the same structure as the test body.

The target wave specifying unit 2 specifies target waves, based on waveform data generated by the AE sensor 1, for example, as described above. The target wave specifying unit 2 generates target wave data in which each of the target waves (i.e., a waveform of each of the target waves) is associated with a detection time point of this target wave. The waveform of the target wave is included in the waveform data generated by the AE sensor 1, and is a waveform representing magnitude of a displacement of the target wave in relation to lapse time (the same applies to the following). The detection time point of the target wave may be, for example, a start time point, an end time point, or an intermediate time point of the duration of the target wave.

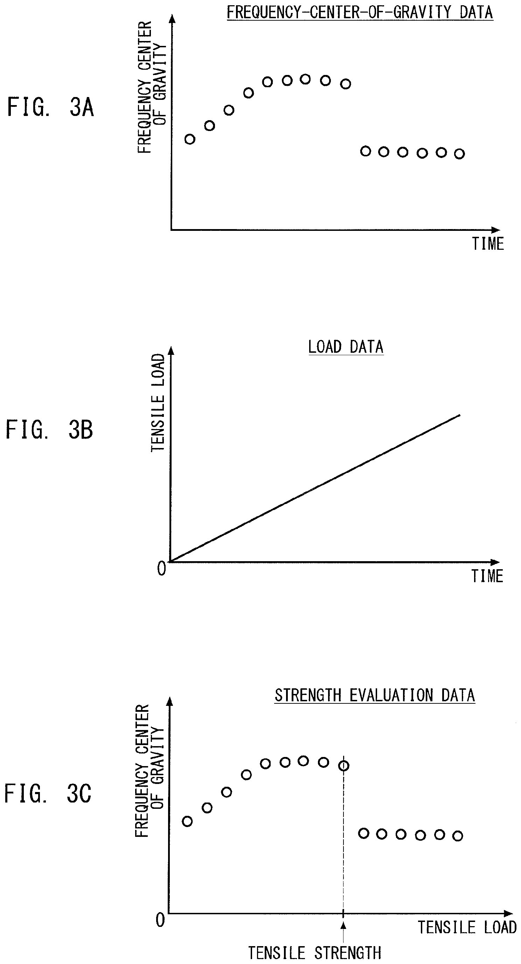

The arithmetic unit 3 calculates a frequency center of gravity concerning each of the specified target waves. For example, the arithmetic unit 3 calculates a frequency center of gravity concerning each of the target waves, based on the above-described target wave data. Then, the arithmetic unit 3 generates frequency-center-of-gravity date in which the frequency center of gravity concerning each of the target waves is associated with the detection time point of this target wave. FIG. 3A is a concept illustration representing one example of the frequency-center-of-gravity date. In FIG. 3A, the horizontal axis indicates lapse time in a test period, the vertical axis indicates the calculated frequency center of gravity concerning each of the target waves, and each white circle indicates the calculated frequency center of gravity concerning the corresponding target wave. The arithmetic unit 3 includes a spectrum generation unit 3a and a frequency-center-of-gravity calculation unit 3b.

The spectrum generation unit 3a generates spectrum data of each of the specified target waves, based on the waveform of this specified target wave in the target wave data. More specifically, the spectrum generation unit 3a transforms, into the spectrum data, the waveform representing a displacement (intensity) of the targe wave in relation to lapse time over the duration of the targe wave. The spectrum data represents an intensity of the AE wave in relation to a frequency. This transform may be performed by fast Fourier transform (FFT).

The frequency-center-of-gravity calculation unit 3b calculates a frequency center of gravity concerning each of the target waves, based on the spectrum data of this target wave. The frequency center of gravity Fg is expressed by the following equation.

$$Fg = \Sigma(Fi \times Pi)/\Sigma Pi$$

Here, Fi indicates each frequency in the spectrum data, and Pi indicates a frequency component of the target wave in the spectrum data (i.e., an intensity of the AE wave at the frequency Fi). The subscript i of Fi and Pi is an index value for distinguishing a plurality of frequencies from each other, and has a value of 1 to n (n is an integer equal to or larger than 2, and is preferably a sufficiently large value). The sign $\Sigma$ indicates the sum over all the values of i.

The frequency-center-of-gravity calculation unit 3b may calculate a frequency center of gravity concerning each of the target waves, based on all the frequency components in the spectrum data of this target wave. Alternatively, the frequency-center-of-gravity calculation unit 3b may calculate a frequency center of gravity concerning each of the target waves, based on only the respective frequency components included in a predetermined frequency range in the spectrum data of this target wave. Here, the predetermined frequency range may be a frequency range excluding a resonance frequency of the AE sensor 1 (e.g., may be a frequency range lower than the resonance frequency).

The evaluation data generation unit 4 generates strength evaluation data. The strength evaluation data are data in which the frequency center of gravity concerning each of the target waves is associated with magnitude of a tensile load applied to the test body at the detection time point of this target wave. The evaluation data generation unit 4 generates the strength evaluation data, based on the frequency-center-of-gravity data and load data, for example. The load data represent magnitude of a tensile load in relation to lapse time in the test period. The load data as well as the frequency-center-of-gravity data are input to the evaluation data generation unit 4 for generation of the strength evaluation data.

FIG. 3B is a concept illustration representing one example of the load data. In FIG. 3B, the horizontal axis indicates load increase time, and the vertical axis indicates a tensile load applied to the test body in the test period. The load data may be generated by a load data generation unit 5. The load data generation unit 5 generates the load data, based on a measured value of a tensile load applied to the test body in the test period and lapse time measured by the time measurement unit 6 in the test period. The load data generation unit 5 inputs the load data to the evaluation data generation unit 4. Here, the measured value of a tensile load may be a value measured by an appropriate load sensor 7 (e.g., a strain gauge attached to the test body). The load data generation unit 5 may be an element of the strength inspection device 10. The time measurement unit 6 and the load sensor 7 may also be elements of the strength inspection device 10.

FIG. 3C is a concept illustration representing one example of the strength evaluation data. The horizontal axis in FIG. 3C indicates a tensile load applied to the test body and corresponding to lapse time. The vertical axis in FIG. 3C indicates a frequency center of gravity. In FIG. 3C, a large number of white circles each indicate a frequency center of gravity calculated concerning the corresponding tensile load. For example, the frequency-center-of-gravity data of FIG. 3A and the strength evaluation data of FIG. 3C are acquired as a result of applying to the test body a tensile load represented by the load data of FIG. 3B.

The evaluation data generation unit 4 outputs the strength evaluation data to a display 8, for example. In this case, the display 8 displays the strength evaluation data on its screen. The strength evaluation data represent a change in frequency center of gravity. This change is caused by an increase in tensile load, as illustrated in FIG. 3C. A tensile strength of the test body that can be determined in such strength evaluation data is magnitude of a tensile load immediately before a frequency center of gravity becomes lower (e.g., remarkably drops) due to an increase in tensile load. In other words, it is considered that once the fiber of the fiber reinforced composite material is broken by a tensile load so as to be destroyed, this material hardly transmits a high-frequency AE wave. Accordingly, once a test body is destroyed in the process of increasing a tensile load, a frequency center of gravity concerning an AE wave generated by a tensile load after that becomes lower. Thus, magnitude of a tensile load immediately before a frequency center of gravity becomes lower can be determined as a tensile strength of the test body. For example, a tensile load indicated by the broken line in FIG. 3C can be determined as a tensile strength.

The evaluation data generation unit 4 may output the strength evaluation data to another device (e.g., a printer or a storage device). In this case, the printer device prints the strength evaluation data on paper, or the storage device stores the strength evaluation data.

(Strength Inspection Method)

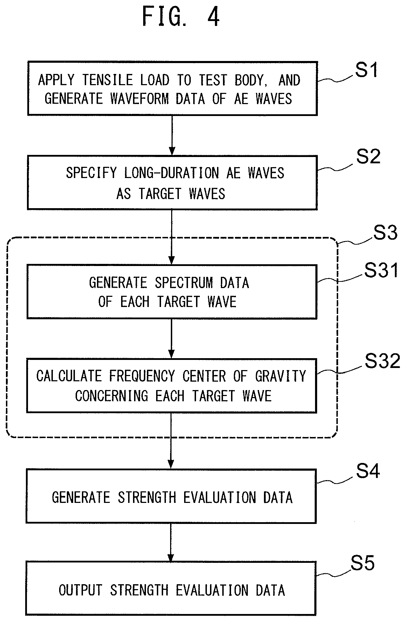

FIG. 4 is a flowchart of a strength inspection method according to the embodiment of the present disclosure. The strength inspection method includes the following steps S1 to S5 for inspecting a tensile strength of the test body that is a fiber reinforced composite material. The strength inspection method is performed using the above-described strength inspection device 10.

At the step S1, a tensile load is applied to a test body in a test period while the tensile load is increased. Waveform data of AE waves thereby generated in the test body are generated by the AE sensor 1 at the step S1.

At the step S2, the target wave specifying unit 2 specifies, as target waves, the AE waves each having duration longer than the time threshold, based on the waveform data generated at the step S1. For example, the target wave specifying unit 2 generates the above-described target wave data, based on the waveform data.

At the step S3, the arithmetic unit 3 calculates a frequency center of gravity concerning each of the target waves specified at the step S2. For example, the arithmetic unit 3 generates the above-described frequency-center-of-gravity data, based on the target wave data generated at the step S2.

The step S3 includes steps S31 and S32. At the step S31, the spectrum generation unit 3a generates spectrum data of each of the target waves, based on the waveform of this target wave in the target wave data generated at the step S2. At the step S32, the frequency-center-of-gravity calculation unit 3b calculates a frequency center of gravity concerning each of the target waves, based on the spectrum data of this target wave generated at the step S31.

At the step S4, the evaluation data generation unit 4 generates strength evaluation data in which a frequency center of gravity concerning each of the target waves is associated with magnitude of a tensile load applied to the test body at a detection time point of this target wave. For example, the evaluation data generation unit 4 generates the strength evaluation data, based on the frequency-center-of-gravity data generated at the step S3 and load data representing magnitude of a tensile load in relation to lapse time at the step S1.

At the step S5, the evaluation data generation unit 4 outputs the strength evaluation data generated at the step S4. For example, the evaluation data generation unit 4 outputs the strength evaluation data to the display 8. In this case, the display 8 displays the strength evaluation data such as FIG. 3C on its screen. A person views the displayed strength evaluation data, and can thereby determine, as a tensile strength of the test body, magnitude of a tensile load immediately before a frequency center of gravity starts to become lower (e.g., remarkably drop) in the process of increasing a tensile load.

(Embodied Example)

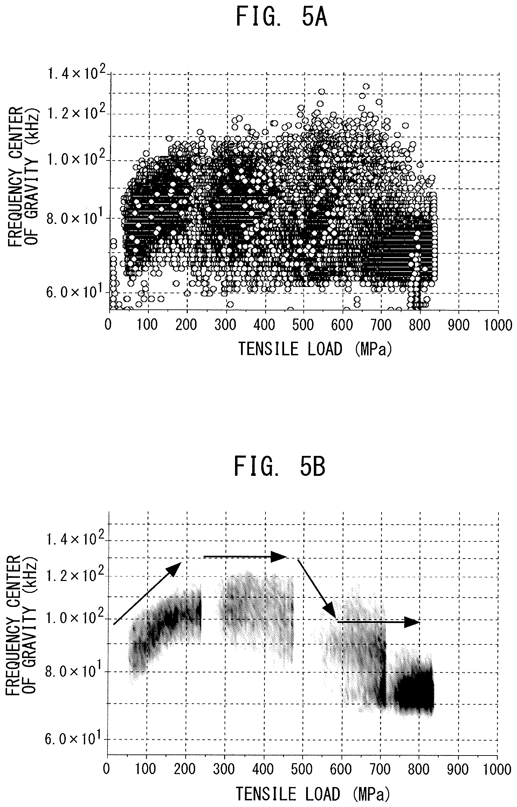

FIG. 5A represents strength evaluation data actually generated by a strength inspection method according to a comparative example. In the case of FIG. 5A, a series of displacements that are included in waveform data generated at the step S1 and that each have magnitude equal to or larger than the displacement threshold are regarded as one AE wave at the step S2, and a frequency center of gravity is calculated concerning each of all the AE waves regardless of duration of the AE wave. The other matters in the case of FIG. 5A are the same as those in the above-described strength inspection method according to the embodiment of the present disclosure. In FIG. 5A, the horizontal axis indicates a tensile load applied at the step S1, and the vertical axis indicates a frequency center of gravity. In FIG. 5A, each small white circle is a plot of the frequency center of gravity concerning one AE wave.

The strength evaluation data of FIG. 5A include a large number of white circles failing to indicate breaking of the test body, and thus makes it difficult to determine a tensile-load value for indication that a frequency center of gravity becomes lower when a tensile load exceeds this tensile-load value. FIG. 5B represents, with a gray scale, a density of frequency-center-of-gravity plots (a large number of white circles) in FIG. 5A. In FIG. 5B, dark-colored regions are regions having a high density of the white circles. It can be said from the regions that a frequency center of gravity becomes lower when a tensile load exceeds approximately 475 MPa, as indicated by the arrows in FIG. 5B. Accordingly, it is found that a tensile strength of the test body is approximately 475 MPa.

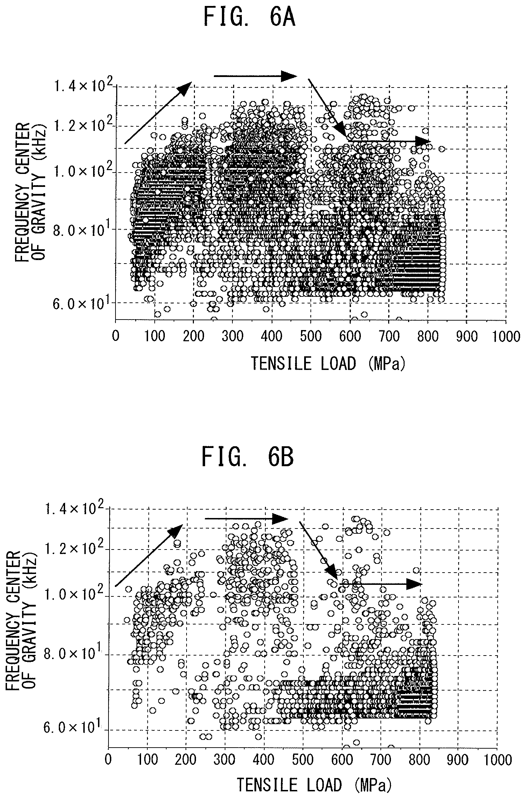

FIG. 6A and FIG. 6B represent strength evaluation data actually generated by the strength inspection method according to the embodiment of the present disclosure. FIG. 6A and FIG. 6B are the data generated from the waveform data that are generated at the step S1 and that are the same as those in the case of FIG. 5A. FIG. 6A represents the case where AE waves having duration longer than 30 microseconds are specified as target waves (i.e., the case where the time threshold is set to be 30 microseconds). FIG. 6B represents the case where AE waves having duration longer than 200 microseconds are specified as target waves.

It is found from the strength evaluation data of FIG. 6A and FIG. 6B that a frequency center of gravity becomes lower when a tensile load exceeds approximately 475 MPa, as indicated by the arrows in these figures. In the case of the strength evaluation data of FIG. 6B generated based on the respective target waves having longer duration, it is possible to determine, more precisely than in the case of FIG. 6A, a tensile-load value for indication that a frequency center of gravity becomes lower when a tensile load exceeds this tensile-load value.

(Advantageous Effects of Embodiment)

An AE wave having duration equal to or shorter than the time threshold tends to include a relatively high frequency component that is not related to breaking of a test body. Accordingly, a frequency center of gravity concerning such short-duration AE wave tends not to indicate whether or not the test body is broken.

In contrast to this, AE waves used for generating strength evaluation data in the embodiment of the present disclosure are not such short-duration AE waves but long-duration AE waves each having a frequency center of gravity that tends to indicate whether or not the test body is broken. Accordingly, a tensile strength of the test body can be precisely determined based on such strength evaluation data.

Processing for AE waves each having duration equal to or shorter than the time threshold (e.g., processing of calculating frequency centers of gravity) becomes unnecessary. For this reason, an amount of processing of generating strength evaluation data is reduced. For example, it becomes unnecessary to generate frequency centers of gravity concerning a huge number of AE waves as in the case of FIG. 5A, and it becomes unnecessary to generate the data of FIG. 5B from the data of FIG. 5A.

The present disclosure is not limited to the above-described embodiment. As a matter of course, various modifications can be made without departing from the essence of the present disclosure.

**REFERENCE SIGNS LIST**

1 AE sensor, 2 target wave specifying unit, 3 arithmetic unit, 3a spectrum generation unit, 3b frequency-center-of-gravity calculation unit, 4 evaluation data generation unit, 5 load data generation unit, 6 time measurement unit, 7 load sensor, 8 display, 10 strength inspection device, Ts set time, Dt displacement threshold

**Claims**

1.    A strength inspection device for evaluating a tensile strength of a test body that is a fiber reinforced composite material, the strength inspection device comprising:

an AE sensor that detects AE waves in a test period in which a tensile load is applied to the test body while increased, the AE waves being generated in the test body by the tensile load, the AE sensor generating waveform data of the AE waves;

a target wave specifying unit that specifies, as target waves, the AE waves each having duration longer than a time threshold, based on the waveform data;

an arithmetic unit that calculates a frequency center of gravity concerning each of the target waves; and

an evaluation data generation unit that generates strength evaluation data in which the frequency center of gravity concerning each of the target waves is associated with magnitude of the tensile load applied to the test body at a detection time point of the target wave.

2. The strength inspection device according to claim 1, wherein in the waveform data, the target wave specifying unit specifies, as the target waves, the AE waves each of which lasts for a time length longer than the time threshold and each of which is a series of displacements where each time a set time elapses, the displacement having magnitude equal to or larger than a displacement threshold occurs at least once in the set time.

3. The strength inspection device according to claim 1, wherein the target wave specifying unit specifies, as the target waves, the AE waves each having duration longer than the time threshold, based on the waveform data, and generates target wave data in which each of the target waves is associated with a detection time point of the target wave,

the arithmetic unit calculates the frequency center of gravity concerning each of the target waves, based on the target wave data, and generates frequency-center-of-gravity data in which the frequency center of gravity concerning each of the target waves is associated with the detection time point of the target wave, and the evaluation data generation unit generates the strength evaluation data, based on the frequency-center-of-gravity data and load data representing magnitude of the tensile load in relation to lapse time.

4. The strength inspection device according to claim 1, wherein the arithmetic unit includes:

a spectrum generation unit that generates spectrum data of each of the target waves, based on a waveform of the target wave; and a frequency-center-of-gravity calculation unit that calculates the frequency center of gravity concerning each of the target waves, based on the spectrum data of the target wave.

5. The strength inspection device according to claim 1, comprising a display that displays the strength evaluation data.

6. A strength inspection method for evaluating a tensile strength of a test body that is a fiber reinforced composite material, the strength inspection method comprising:

applying a tensile load to the test body while increasing the tensile load, and by an AE sensor, generating waveform data of AE waves generated in the test body by the tensile load; by a target wave specifying unit, specifying, as target waves, the AE waves each having duration longer than a time threshold, based on the waveform data; by an arithmetic unit, calculating a frequency center of gravity concerning each of the target waves; and by an evaluation data generation unit, generating strength evaluation data in which the frequency center of gravity concerning each of the target waves is associated with magnitude of the tensile load applied to the test body at a detection time point of the target wave.

# FIG. 1

FIG. 2

FIG. 3A

FREQUENCY-CENTER-OF-GRAVITY DATA

FIG. 3B

LOAD DATA

FIG. 3C

STRENGTH EVALUATION DATA

TENSILE STRENGTH

EP 3 929 560 A1

# FIG. 4

APPLY TENSILE LOAD TO TEST BODY, AND GENERATE WAVEFORM DATA OF AE WAVES — S1

SPECIFY LONG-DURATION AE WAVES AS TARGET WAVES — S2

S3

GENERATE SPECTRUM DATA OF EACH TARGET WAVE — S31

CALCULATE FREQUENCY CENTER OF GRAVITY CONCERNING EACH TARGET WAVE — S32

GENERATE STRENGTH EVALUATION DATA — S4

OUTPUT STRENGTH EVALUATION DATA — S5

11

FIG. 5A

FIG. 5B

FIG. 6A

FIG. 6B

| INTERNATIONAL SEARCH REPORT | International application No. |
|---|---|
| | PCT/JP2019/006335 |

**A. CLASSIFICATION OF SUBJECT MATTER**
Int.Cl. G01N3/08(2006.01)i, G01N3/32(2006.01)i

According to International Patent Classification (IPC) or to both national classification and IPC

**B. FIELDS SEARCHED**

Minimum documentation searched (classification system followed by classification symbols)
Int.Cl. G01N3/00-3/62

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| Y | JP 5841081 B2 (IHI INSPECTION & INSTR CO., LTD.) 06 January 2016, paragraphs [0001], [0019]-[0036], fig. 2-4 (Family: none) | 1-6 |
| Y | US 2001/0047691 A1 (DZENIS, Y.) 06 December 2001, paragraphs [0045], [0046], [0070]-[0092], fig. 1-5 & WO 2001/050122 A1 & AU 2473501 A | 1-6 |
| A | US 2019/0033263 A1 (UNIVERSITY OF SOUTH CAROLINA) 31 January 2019, paragraph [0108] (Family: none) | 1-6 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16.05.2019 | 28.05.2019 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2019/006335 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 5-133842 A (TOSHIBA CORPORATION) 28 May 1993, paragraph [0017] (Family: none) | 1-6 |
| A | US 5275050 A (MANCOSU, F.) 04 January 1994, column 5, line 45 to column 6, line 43 & JP 4-232835 A & EP 470654 A1 & DE 69100349 T2 & IT 9021113 A1 & ES 2047982 T3 & BR 9103321 A | 1-6 |
| A | JP 2017-166953 A (IHI INSPECTION & INSTR CO., LTD.) 21 September 2017, entire text, all drawings (Family: none) | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5841081 B